Europäisches Patentamt

European Patent Office

Office européen des brevets

(11) Publication number:

0 361 870
A2

# EUROPEAN PATENT APPLICATION

(21) Application number: 89309796.4

(22) Date of filing: 26.09.89

(51) Int. Cl.⁵ G06F 15/20

(30) Priority: 26.09.88 JP 241295/88
26.09.88 JP 241296/88

(43) Date of publication of application:
04.04.90 Bulletin 90/14

(84) Designated Contracting States:
DE GB

(71) Applicant: SHARP KABUSHIKI KAISHA
22-22 Nagaike-cho Abeno-ku
Osaka 545(JP)

(72) Inventor: Nakane, Futoshi
4-201-1, Minamikyobate-cho
Nara-shi Nara-ken(JP)
Inventor: Fujimura, Shigeru
3-6-203, 2-chome Omiya-cho
Nara-shi Nara-ken(JP)
Inventor: Onishi, Satoshi

2-29-3, Utsukushigaoka Midori-ku
Yokohama-shi Kanagawa-ken(JP)
Inventor: Nagaya, Toshikazu
492, Minosho-cho
Yamatokoriyama-shi Nara-ken(JP)
Inventor: Takiguchi, Yasuhiro
6-15-209, 1-chome Jingu
Nara-shi Nara-ken(JP)
Inventor: Harada, Shigeaki
19-9, 4-chome, Tezukayamaminami
Nara-shi Nara-ken(JP)
Inventor: Yamamoto, Yasushi
3-13-103, 2-chome Ukyo
Nara-shi Nara-ken(JP)

(74) Representative: Brown, Kenneth Richard et al
R.G.C. Jenkins & Co. 26 Caxton Street
London SW1H 0RJ(GB)

(54) Document creation system.

(57) A document creation system wherein a plurality of display zones are set on a screen display, which respectively correspond to each one of various media such as graphics, images and characters, and in each of which a document is independently created or edited, comprising: a work item classification control circuit for controlling and classifying work items according to said media; medium determination circuit for determining the medium of the set display zone; and menu displaying circuit for selecting work items corresponding to the medium determined by said medium determination circuit from the work items classified by said work item classification control circuit, and displaying said selected work items as a menu in the neighbourhood of an area where document creation or document editing is being carried out in the set display zone on the screen display.

Only work items which correspond to the medium of the set display zone are displayed in the neighbourhood of an area where creating/editing op-eration is being carried out in the set display zone, thereby simplifying the moving operation of the mouse cursor and a judgement in selecting work item so as to increase the efficiency when creating or editing a document.

FIG. 1

# DOCUMENT CREATION SYSTEM

## FIELD OF THE INVENTION

The present invention relates to a document creation system such as word processors, work stations and personal computers having a menu display function for displaying work items when creating or editing a document composed of multimedia such as graphics, images, characters and the like.

## BACKGROUND OF THE INVENTION

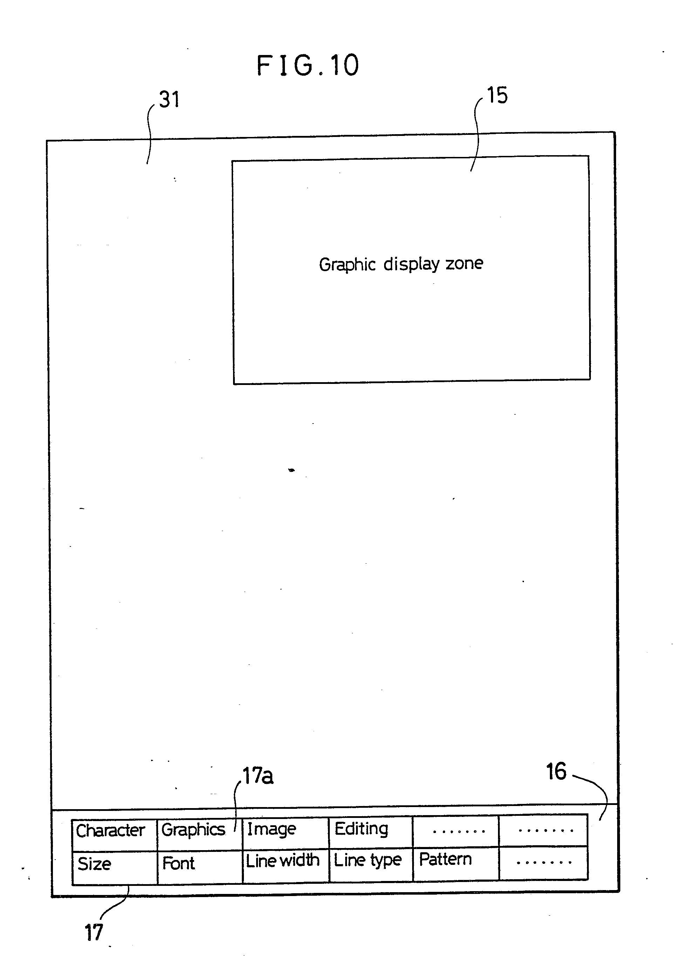

Firstly, a prior art will be explained with reference to Figs. 10 to 12 in the accompanying drawings. In a conventional document creation system having a menu display function, a main menu 17 showing all menu items is displayed in a fixed menu display area 16 positioned at the lower part of a screen display 31 as shown in Fig. 10 (this position can be the upper part, left hand or right hand of the screen display 31), irrespective of the position of a graphic display zone 15 on the screen dispaly 31. Whatever display zone is used, the main menu 17 is displayed in the fixed menu display area 16 positioned at the lower (upper, left hand, or right hand) of the screen display 31. The main menu 17 includes, as shown in Fig. 10, menus such as character, graphics, image, editing, size, font, line width, line type, pattern and the like. The menu "editing" for instance, is subdivided into menus such as character editing, graphics editing, image editing and the like. The subdivided menu "character editing" is further divided into work items such as delete, copy, move, search, replace and the like.

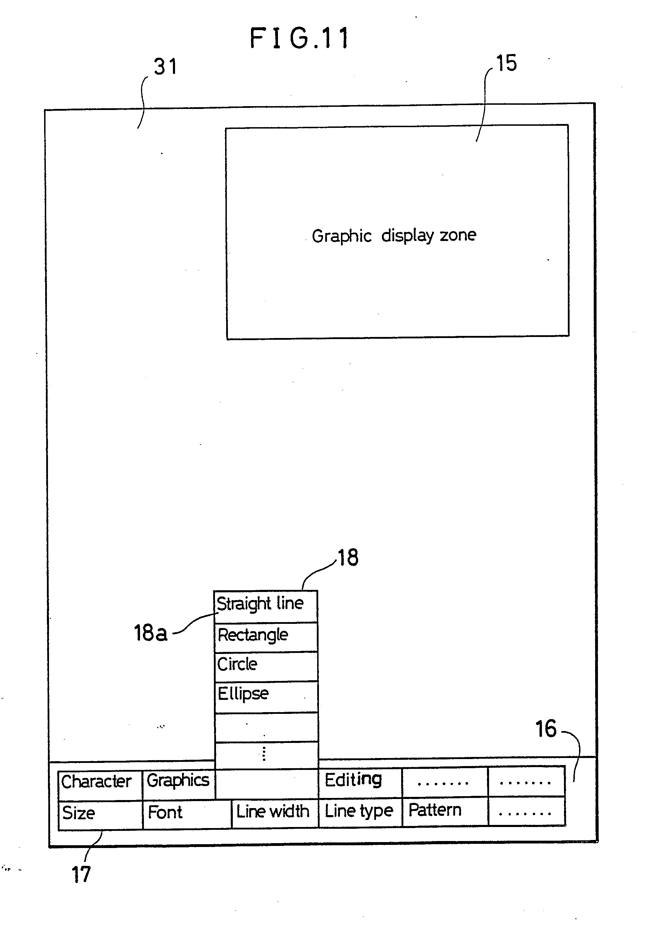

When drawing a line at the time of creating graphics in the graphic display zone 15 for instance, a mouse cursor or other device (not shown) is moved to select a menu "graphics" 17a on the main menu 17 positioned at the lower part of the screen display 31. Then, the menu "graphics" 17a is further divided into work items displayed thereon as shown in Fig. 11. Afterwards, the mouse cursor is moved to select a work item "straight line" 18a from them, and the mouse cursor is again moved to the graphic display zone 15, thereby completing the drawing of a straight line.

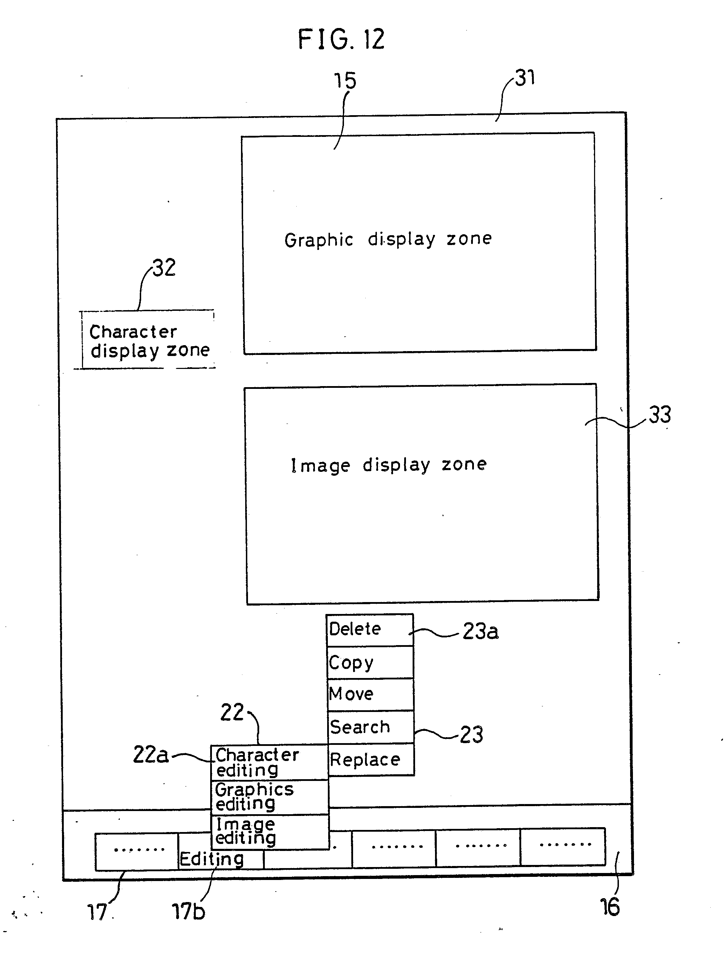

When deleting characters at the time of creating or editing a document, desired deletion can be accomplished with the following three steps for menu selection. Fig. 12 shows the screen display 31 in which the graphic display zone 15, a character display zone 32 and an image display zone 33 are displayed.

(1) A menu "editing" 17b is selected from the main menu 17 by clicking the mouse, and the subdivided menus 22 are displayed.

(2) A subdivided menu "character editing" 22a is selected from the above subdivided menus 22, and work items 23 are displayed.

(3) A work item "delete" 23a is selected from the work items 23, and then the characters are deleted.

In the conventional document creation system, since the menu display area 16 is fixed in the lower part (upper part , left hand or right hand) of the screen display 31, it often occurs that the graphic display zone 15 is distant from the menu display area 16 depending on the location of the graphic display zone 15. Therefore, the movement of the mouse cursor from the graphic display zone 15 to the menu display area 16 is increased causing the moving operation of the cursor therebetween to be extremely troublesome. Further, since all work items are allocated to a main menu in the menu display area 16, if the number of work items exceeds the number of items which can be included in the main menu, the main menu has to be divided into more detailed menus to include the all work items. This increases the number of operations for selecting a desired work item. Specifically, when not only a particular type of graphics is drawn but also the line type, line width, touch or the like of the graphcis is specified, the operation will be more complex and troublesome. Furthermore, when there exist various display zones other than the graphic display zone 15 on the screen display 31, the operation for selecting a work item is still more complex and troublesome. The increase in creating documents composed of multimedia such as characters, graphics and images in recent years has brought about a need for a document creation system which is not only easy to handle but also superior in labour effectiveness, and therefore conventional document creation systems having a menu display function can no longer meet such a need.

## SUMMARY OF THE INVENTION

An object of the present invention is to provide a document creation system capable of displaying a menu, which includes only work items suitable for an operation being carried out, close to an area where the operation is being carried out in a display zone on a screen display, thereby simplifying the troublesome menu selection process and increasing the efficiency.

Another object of the present invention is to provide a document creation system capable of displaying a desired menu close to an area where an operation being carried out in a display zone only by setting the display zone, whereby it is facilitated to distinguish a work item to be selected and the number of operations required for selecting a work item can be reduced.

In order to achieve the foregoing objects, a document creation system according to the present invention wherein a plurality of display zones are set on a screen display which respectively correspond to each one of various media such as graphics, images, characters and the like, and in each of which a document is independently created, comprises:

work item classification control means for controlling and classifying work items according to said media:

medium determination means for determining the medium of a display zone set based on a coordinate position specified therefor by clicking a mouse or other device; and

means for selecting work items corresponding to the medium determined by the medium determination means from the work items classified by said work item classification control means, and displaying said selected work items as a menu close to an area where document creation is carried out in the set display zone.

In the above arrangement, if there exists a previously set display zone which is different from a newly set display zone when creating a document, and a menu remains in the neighbourhood of the previous display zone, the menu is deleted, and a menu composed of work items corresponding to the medium of the new display zone is displayed close to an area where document creation is being carried out in the new display zone. This arrangement enables to simplify the menu selectin process and increases the efficiency.

Another alternative document creation system according to the present invention wherein a plurality of display zones are set on a screen display which respectively correspond to each of multi-media such as graphics, images, characters and the like, and in each of which a document is independently edited, comprises:

display zone control means for controlling the plurality of display zones which respectively corresond to one of said multi-media;

medium determination means for determining the medium of a display zone set based on a coordinate position specified therefor by clicking a mouse or other device; and

work item control selection means for preparing work items which correspond to the medium determined by said medium determination means and selecting suitable work items from the work items thus prepared; and

menu displaying means for displaying a menu composed of the work items selected by said work item control selection means, in a coordinate position close to an area where document editing is being carried out in the set display zone, said coordinate position being specified by clicking the mouse or other device.

In the above arrangement, the medium of a set display zone is determined when editing a document, and a menu composed of work items selected in accordance with the above determined medium is prepared for editing. The menu thus prepared is displayed in a position specified by clicking the mouse. This arrangement enables to simplify the complicated menu selection process and improves the efficiency.

For a better understanding of the nature and advantages of the present invention, reference should be made to the following detailed description taken in conjunction with the accompanying drawings.

BRIEF DESCRIPTION OF THE DRAWINGS

Figs. 1 to 4 show an embodiment of the present invention.

Fig. 1 is a block diagram showing the structure of a document creation system according to the present invention.

Fig. 2 is a flow chart showing an example of the operations of the document creation system of the present invention.

Figs. 3 and 4 are views showing the relationship between graphic display zones and a menu for document creation composed of work items selected when creating graphics, the graphic display zones and menu being displayed on a screen display.

Figs. 5 to 9 show another embodiment of the present invention.

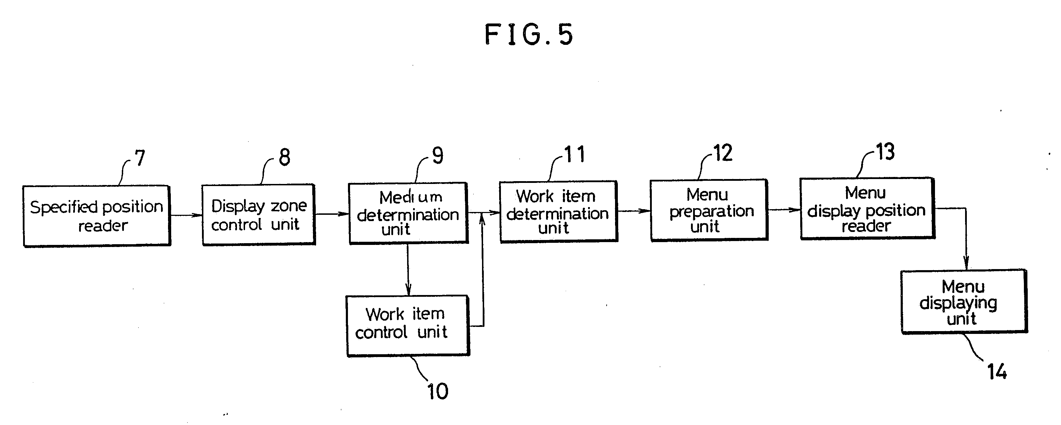

Fig. 5 is a block diagram showing the structure of another alternative document creation system according to the present invention.

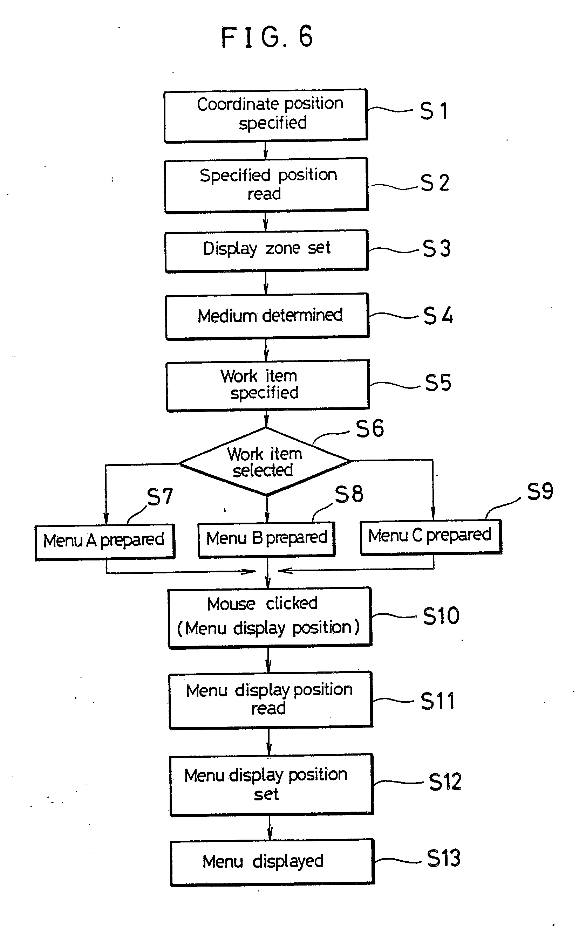

Fig. 6 is a flow chart showing an example of the operations of the document creation system shown in Fig. 5.

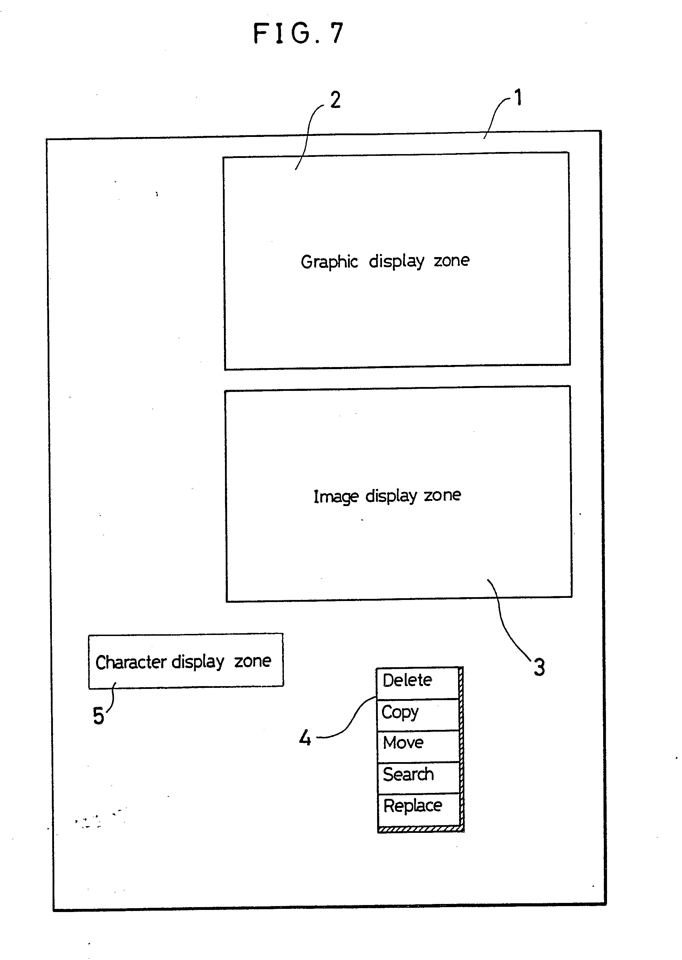

Figs. 7 to 9 are views showing the relationship between display zones respectively corresponding to one of various media and a menu for document editing composed of work items corresponding to one of the various media, the display zones and menu being displayed on a screen display.

Figs. 10 to 12 show a prior art.

Fig. 10 is a view showing the relationship between a graphic display zone and menu display area both displayed on a screen display when creating a document with a conventional document creation system.

Fig. 11 is a view showing the relationship between the graphic display zone and subdivided menus in a menu displayed on the screen display when creating a document with the conventional document creation system.

Fig. 12 is a view showing the relationship between the display zones respectively corresponding to one of various media and subdivided menus in a menu, these being displayed on the screen display when editing a document with the conventional document creation system.

DESCRIPTION OF THE EMBODIMENTS

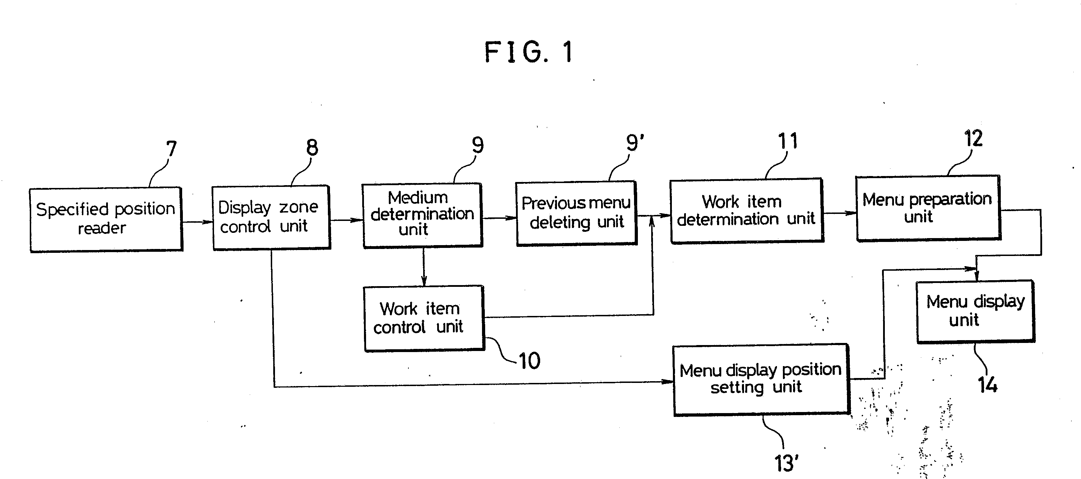

Referring now to Figs. 1 to 4, one embodiment of the present invention will be described hereinbelow.

Fig. 1 is a block diagram illustrating the functions of the embodiment of the present invention.

The embodiment in the following description discusses the case in which a document including characters, graphics and images is newly created with a document creation system.

Firstly, a desired position on a screen display is specified by a mouse (not shown). Then, a specified position reader 7 reads the coordinate of the specified position. Information on the coordinate read by the specified position reader 7 is transmitted to a display zone control unit 8 where a display zone is set based on the above information. Thereafter, a medium determination unit 9 determines the medium of the set display zone, based on information from the specified position reader 7 and display zone control unit 8. That is, it is determined by the medium determination unit 9 which of media such as graphics, characters and images corresponds to the display zone that has been set. In the case there exists a previously set display zone which is different from the newly set one and a menu remains in the neighbourhood of the previous display zone, a previous menu deleting unit 9' deletes said menu. A work item control unit 10 prepares information on work items corresponding to the medium of the set display zone determined by the medium determination unit 9. A work item determination unit 11 determines a menu to be prepared based on the information from the work item control unit 10, and then a menu preparation unit 12 prepares an appropriate menu. A menu display position setting unit 13' finally determines the position for the menu to be displayed in view of the position of the set display zone and the size of the menu prepared by the menu preparation unit 12. A menu displaying unit 14 displays, on the coordinate position on the screen display that has been determined by the menu display position setting unit 13', the menu composed of the work items corresponding to the medium of the set display zone.

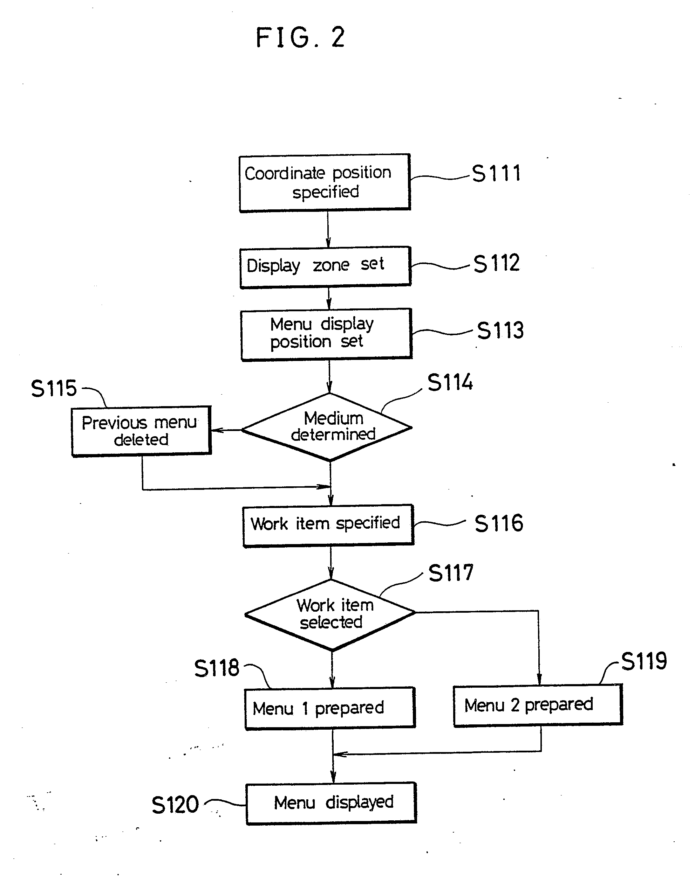

Fig. 2 shows the flow of the actual operations of the document creation system and the following is the description thereof.

A desired position is firstly specified for a display zone to be set, by clicking the mouse or the like (S 111), and information on the coordinate position thereof is read by the specified position reader 7. The display zone control unit 8 sets a display zone according to the information thereof (S 112), and determines the position of a menu to be displayed on the screen display (S 113). Then, the medium determination unit 9 determines the medium of the set display zone based on the coordinate position thereof (S 114). If there exists a previously set display zone other than the above set display zone, a menu displayed in the neighbourhood of the previous display zone is deleted by the previous menu deleting unit 9' (S 115). After the medium of the display zone is determined by the medium determination unit 9, the work item control unit 10 prepares information on work items which correspond to the medium of the display zone (S 116). The work item determination unit 11 determines a menu to be prepared based on the information from the work item control unit 10 and selects work items as the components of the menu (S 117). In the wake of S 117, a menu 1 (or menu2) is prepared so as to include the selected work items which correspond to the medium of the display zone (S 118/S 119). The menu thus prepared is displayed on the set position determined in S 113 on the screen display (S 120). The size of the menu etc. is taken into consideration when displaying the menu in this step.

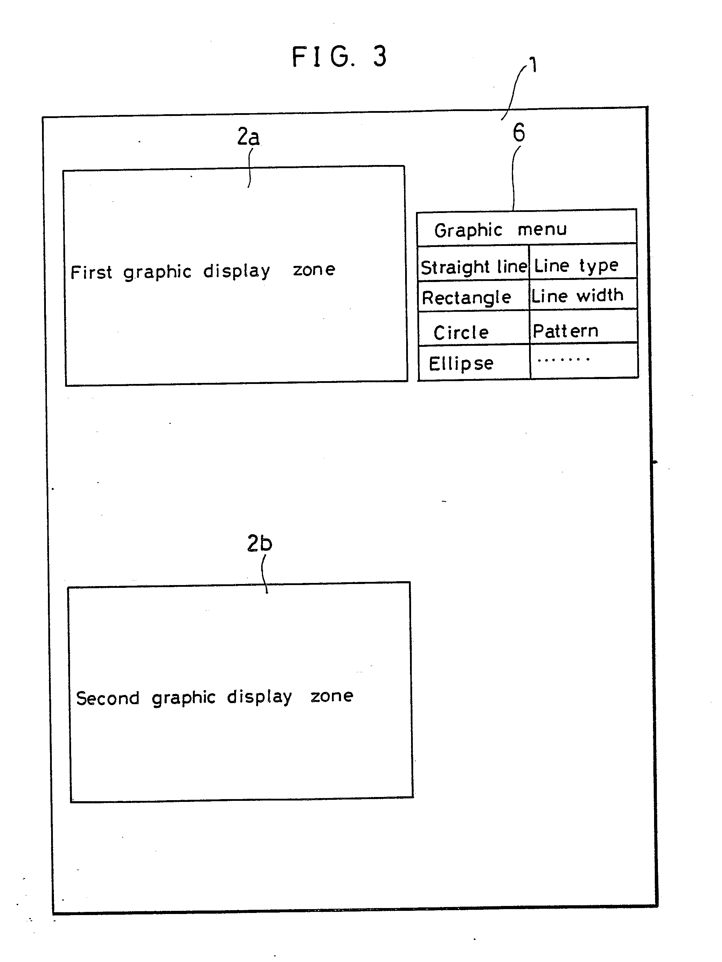

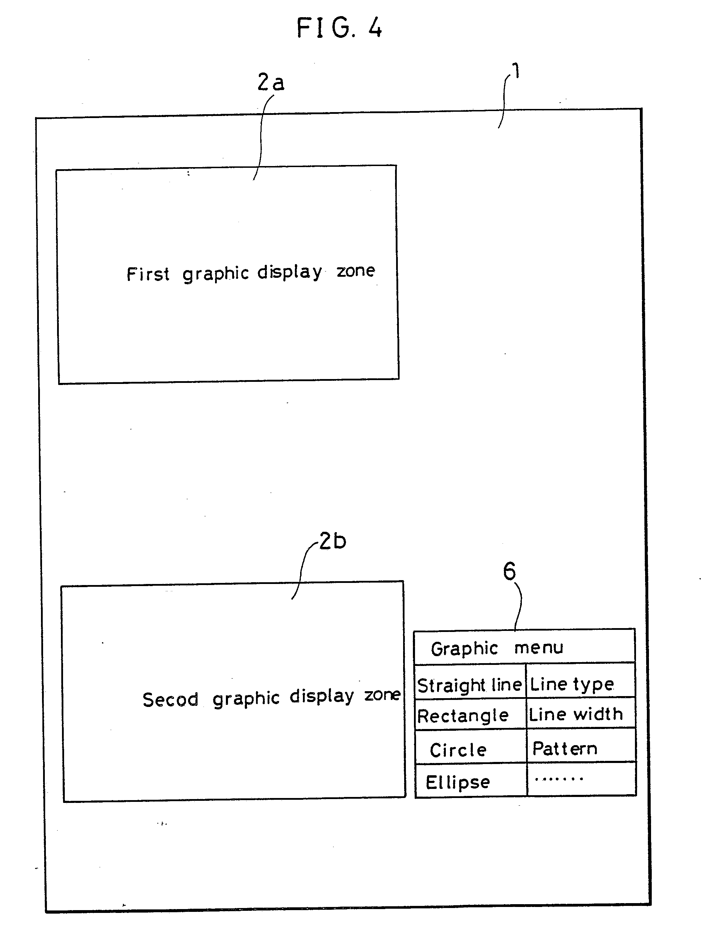

Figs. 3 and 4 respectively show an example of a menu displayed through the above-described process by means of a document creation system having the above units. Fig. 3 shows an exemplary menu displayed when creating a document in a first graphic display zone 2a. The work items (e.g. straight line, rectangle, circle, ellipse, line type, line width, pattern and the like) composing a graphic menu 6 displayed close to the first graphic display zone 2a respectively indicate a command for creating graphics, and desired graphics can be created by selecting the above commands by means of clicking the mouse or other device. Fig. 3 also shows a second graphic display zone 2b. This document creation system is designed to carry out document creation in each graphic display zone in the case a plurality of graphic display zones exist on the screen display.

Fig. 4 shows an exemplary menu displayed in the case that document creation is shifted from the first graphic display zone 2a toward the second graphic display zone 2b. In this case, like the creating operation carried out in the first display zone 2a. the mouse or other device is clicked in order to select work items which compose the graphic menu 6, thereby performing desired document creation.

As described above, a desired menu can be displayed in a desired position in this arrangement, thereby not only saving time and labour required for operations (e.g. menu selection, reciprocating the mouse cursor between the menu and a working position, and the like) but also making it possible to easily understand the operational situation at a glance.

In the above arrangement, a desired menu can be displayed close to an area where document creation is being carried out in a display zone only by clicking the mouse or other device, and a desired command can be easily selected. Moreover, the movement of the mouse cursor can be reduced, thereby increasing the efficiency.

The following description describes another embodiment with reference to Figs. 5 to 9.

In this embodiment, those parts that are substantially equivalent or function substantially similarly to those of the first embodiment are indicated by the same reference numerals for convenience.

This embodiment discloses the exemplary case in which a document composed of any of media such as characters, graphics and images, which has been already created on a screen in a document creation system, is edited.

Fig. 5 is a block diagram showing the functions of the present invention and with reference to this, the function of each unit will be explained hereinafter.

Firstly, a desired position on the screen display (not shown) is specified by the mouse (not shown) or other device. Then, the coordinate of the specified position is read by the specified position reader 7. Information on the coordinate of the specified position is transmitted to the display zone control unit 8 where a display zone is set based on the above information. Thereafter, a medium determination unit 9 determines the medium of the set display zone based on the information from the specified position reader 7 and display zone control unit 8. That is, it is determined by the medium determination unit 9, based on the information from the specified position reader 7 and display zone control unit 8, which of the media such as graphics, characters and images corresponds to the display zone that has been set. Based on information on the medium of the display zone determined by the medium determination unit 9, the work item control unit 10 prepares information on work items corresponding to the medium of the display zone thus determined. After the medium of the set display zone is determined by the medium determination unit 9, the work item determination unit 11 determines a menu to be prepared based on the information from the work item control unit 10, selecting work items which correspond to the medium. Then, the menu preparation unit 12 prepares an appropriate menu composed of the work items selected by the work item determination unit 11. A desired position on the screen display is specified by clicking the mouse (not shown) or the like. A menu display position reader 13 reads the coordinate thereof and set the coordinate position as a display position for the menu. A menu displaying unit 14 displays the menu prepared by the menu preparation unit 12 on the coordinate position, which has been read by the menu display position reader 13, on the screen display.

Fig. 6 shows the flow of the actual operations of the document creation system and the description thereof will be made with reference to Fig. 6.

A desired position on the screen display is specified for a display zone to be edited by clicking the mouse (not shown) or other device (S 1). Then the specified position reader 7 reads the coordinate thereof (S 2) and information on the coordinate position is transmitted to the display zone control unit 8, where a display zone is set (S 3). Based on information from the display zone control unit 8, the medium of the display zone to be edited is determined (S 4). Then, based on information from the medium determination unit 9, the work item control unit 10 prepares information on work items corresponding to the medium of the set display zone.

After the medium determination performed by the medium determination unit 9, the work item determination unit 11 determines a menu to be prepared specifying work items for the components of the menu, based on the information from the work item control unit 10 (S 5). In the wake of S 5, work items which correspond to the medium of the display zone are selected (S 6), and a menu (e.g. menu A, B or C) is prepared by the menu preparation unit 12 so as to include the above selected work items (S 7/S 8/S 9). Then, a desired position on the screen display is specified for the display position of the menu (e.g. menu A, B or C) by clicking the mouse or other device (S 10), and the coordinate thereof is read by the menu display position reader 13 (S 11). The coordinate position thus read is set as the display position of the menu (S 12) and the menu displaying unit 14 displays the set menu thereon (S 13).

Figs. 7 to 9 respectively show an example of a menu prepared in accordance with the foregoing flow. on the screen display.

Fig. 7 shows an exemplary menu displayed when editing a document in a character display zone 5, and the work items on a menu 4 respectively indicates an editing command to be used for editing a document. These work items (e.g. delete. copy. move, search, replace and the like) composing the menu 4 are properly selected by clicking the mouse or other device, thereby performing desired editing operation. As shown in Fig. 7. the menu 4 can be displayed close to an area where editing operation is being carried out, in the display zone.

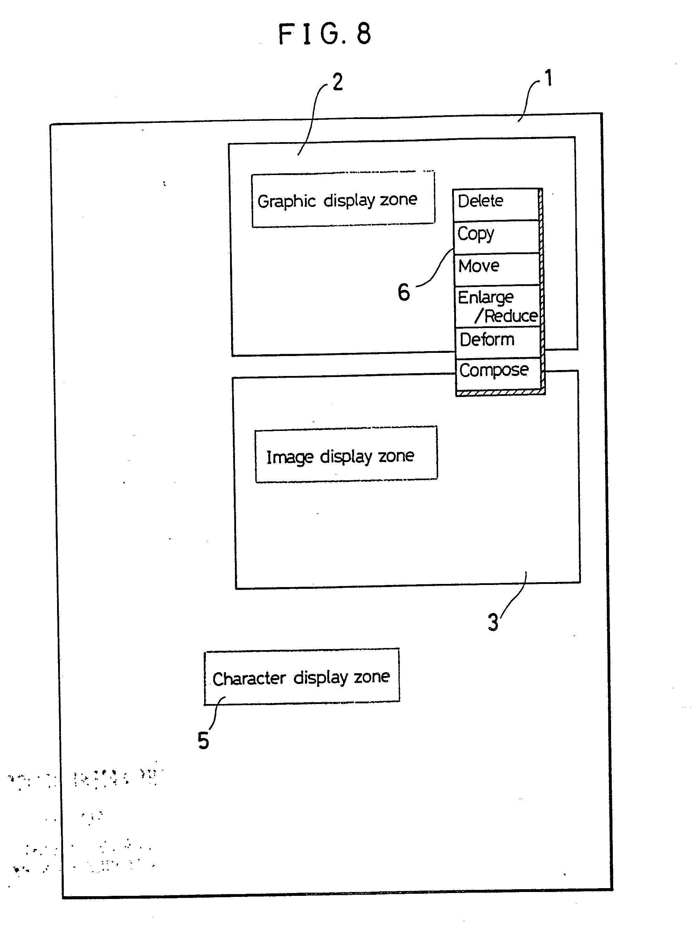

Fig. 8 shows an exemplary menu displayed in the case a graphic display zone 2 is set. In Fig. 8, a menu 6 is displayed close to an area where editing operation is carried out in the graphic display zone 2 and this menu 6 includes work items which respectively indicate an editing command to be used for editing graphics. The work items (e. g. delete. copy, move, enlarge/reduce, deform, compose and the like) are properly selected by clicking the mouse or other device, thereby performing desired graphic editing operation.

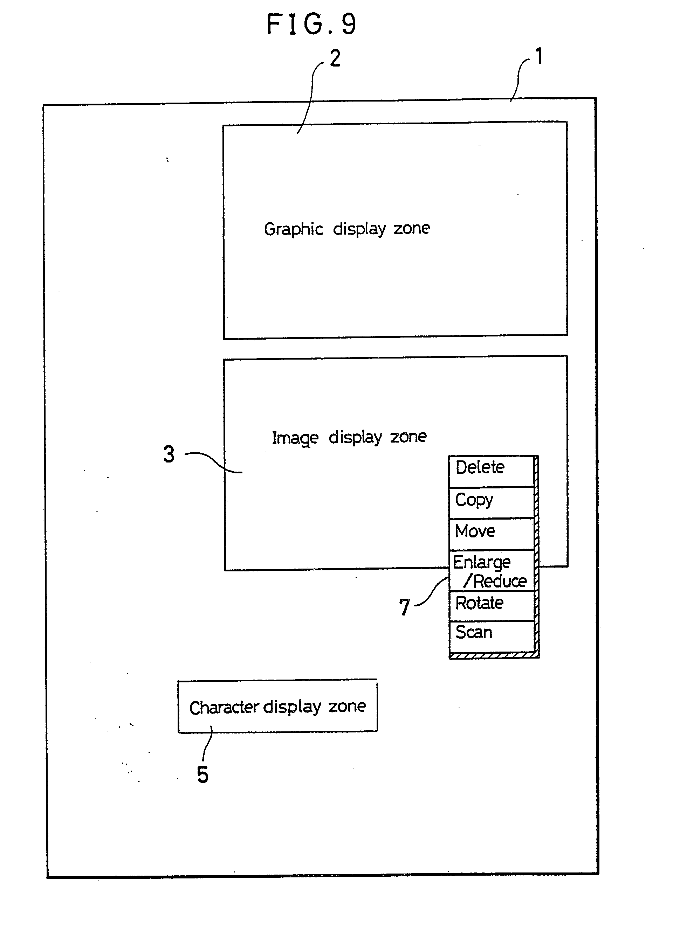

Fig. 9 shows an exemplary menu displayed when editing operation is carried out in an image display zone 3. In Fig. 9, a menu 7 is displayed close to an area where editing operation is carried out in the image display zone 3 and this menu 7 includes work items which respectively indicate an editing command to be used for editing an image. These work items (delete, copy, move, enlarge/reduce, rotate, scan) composing the menu 7 are properly selected by clicking the mouse or other device, thereby performing desired image editing operation. The character display zone 5 shown in Figs. 7 to 9 is an area different from the graphic display zone 2 and image display zone 3.

As described above, the menus 4, 6 and 7 are respectively displayed close to an area where editing operation is carried out in the set display zone. The respective set display zones have their own menu arbitrarily displayed at a position close to an area where editing operation is carried out, thereby not only saving time and labour required at the time of selecting a menu but also reducing the complexity in the moving operation of the mouse cursor between a working position and the position of a menu. With the above arrangement, a menu including only work items suitable for an operation being carried out can be displayed close to an area where the operation is carried out in a set display zone, thereby simplifying the troublesome menu selection process (moving the mouse; judgement in selecting menu items; and the like) and increasing the efficiency.

A document creation system according to the present invention wherein a plurality of display zones are set on a screen display which respectively correspond to each one of various media such as graphics, images, characters and the like, and in each of which a document is independently created, comprises:

work item classification control means for controlling and classifying work items according to said media;

medium determination means for determining the medium of a display zone set based on a coordinate position specified therefor by clicking a mouse or other device; and

menu displaying means for selecting work items corresponding to the medium determined by said medium determination means from the work items classified by said work item classification control means, and displaying said selected work items as a menu close to an area where document creation is being carried out, in the set display zone.

In the above arrangement, the medium of a set display zone for document creation, the coordinate position of which has been specified by clicking the mouse or other device, is determined; if there remains a menu in the neighbourhood of a previously set display zone which is different from the newly set display zone, the menu is deleted; and work items which correspond to the determined medium are selected to be displayed as a menu close to an area where document creation is being carried out in the new display zone, thereby simplifying the troublesome menu selection process and increasing the efficiency.

Another alternative document creation system according to the present invention wherein a plurality of display zones are set on a screen display which respectively correspond to each one of multi-media such as graphics, images, characters and the like, and in each of which a document is independently edited, comprises:

a display zone control unit for controlling the plurality of display zones which correspond to one of said multi-media;

medium determination means for determining the medium of a display zone set based on a coordinate position specified therefor by clicking a mouse or other device;

a work item control selection unit for preparing work items which correspond to the medium determined by said medium determination unit and selecting suitable work items from the work items thus prepared; and

a menu displaying unit for displaying a menu including the work items selected by said work item control selection unit, in a coordinate position specified by clicking the mouse or the like. said coordinate position being close to an area where document editing is being carried out, in the set display zone.

With the above arrangement, the coordinate position of a display zone to be edited and the medium of the display zone can be specified; work items corresponding to said medium are determined and selected; and a menu composed of said selected work items can be displayed in a position specified by clicking the mouse or other device, thereby simplifying the overall operation and increasing the efficiency.

The invention being thus described, it may be obvious that the same may be varied in many ways. Such variations are not to be regarded as a departure from the scope of the invention.

There are described above novel features which the skilled man will appreciate give rise to advantages. These are each independent aspects of the invention to be covered by the present application, irrespective of whether or not they are included within the scope of the following claims.

**Claims**

1. A document creation system wherein a plurality of display zones are set on a screen display, which respectively correspond to each one of various media such as graphics, images and characters, and in each of which a document is independently created or edited, comprising:
work item classification control means for controlling and classifying work items according to said media;
medium determination means for determining the medium of a set display zone; and
means for selecting work items corresponding to the medium determined by said medium determination means from the work items classified by said work item classification control means, and displaying said selected work items as a menu in the neighbourhood of an area where document creation or document editing is being carried out, in the set display zone on the screen display.

2. A document creation system wherein a plurality of display zones are set on a screen display, which respectively correspond to each one of various media such as graphics, images and characters, and in each of which a document is independently created, comprising:
work item classification control means for controlling and classifying work items according to said media;
medium determination means for determining the medium of a display zone set on a coordinate position specified therefor; and
means for selecting work items corresponding to the medium determined by said medium determination means from the work items classified by said work item classification control means, and displaying said selected work items as a menu in the neighbourhood of an area where document creation is being carried out, in the set display zone on the screen display.

3. A document creation system wherein a plurality of display zones are set on a screen display, which respectively correspond to each one of various media such as graphics, images and characters, and in each of which a document is independently created, comprising:
specified position reading means for reading a specified coordinate position specified for a display zone for document creation and releasing information on said coordinate position;
display zone control means for setting a display zone based on the information on the coordinate position from said specified position reading means;
medium determination means for determining the medium of the set display zone based on information from said display zone control means;
previous menu deleting means for deleting a previous menu displayed in the neighbourhood of a previously set display zone in the case the set display zone is different from the previously set display zone;
work item control means for preparing information on work items which correspond to the medium of said set display zone determined by said medium determination means;
work item determination means for determining a menu to be prepared based on the information from said work item control means;
menu preparation means for preparing the menu based on information from said work item determination means;
menu display position setting means for determining the displaying position of the fmenu prepared by said menu preparation means, in view of the position of the set display zone, the size of the menu and the positional relationship between said set display zone and said menu; and
menu displaying means for displaying the menu composed of the work items which correspond to the medium of said set display zone in the coordinate position on the screen display which has been determined by said menu display position setting means.

4. A document creation system according to any one of claims 1 to 3 wherein said medium determination means determines which of the various media such as graphics, characters and images corresponds to said set display zone.

5. A document creation system according to claim 3 wherein said specified position reading means comprises a mouse of similar device for reading the coordinate position on the screen display.

6. A document creation system according to claim 3 wherein said work items are displayed on the screen display when a document is created with any of the variety of media, functioning as creation commands used for creating the document.

7. A document creation system wherein a plurality of display zones are set on a screen display, which respectively correspond to each one of the various media such as graphics, images and characters, and in each of which a document is independently edited, comprising:
display zone control means for setting a display zone based on a coordinate position specified therefor by clicking a mouse or similar device;
medium determination means for determining the medium of the display zone set by said display zone control means;
work item control selection means for preparing work items which correspond to the medium determined by said medium determination means and for selecting suitable work items from said prepared work items; and
menu displaying means for displaying a menu including said suitable work items selected by said work item control selection means in a coordinate position specified by clicking the mouse or similar device, said coordinate position being located in the neighbourhood of an area where document editing is being carried out, in the set display zone.

8. A document creation system wherein a plurality of display zones are set on a screen display, which respectively correspond to each one of the various media such as graphics, images and characters, and in each of which a document is independently edited, comprising:
specified position reading means for reading a coordinate position on the screen display specified for a display zone by means of clicking a mouse or similar device and releasing information on said coordinate position;
display zone control means for setting a display zone based on the information on the coordinate position read by said specified position reading means;
medium determination means for determining the medium of the set display zone based on information from said specified position reading means and display zone control means;
work item control means for releasing information on work items which correspond to the medium of the set display zone based on information from said medium determination means;

work item determination means for determining a menu to be prepared based on the information on work items from said work item control means after the medium of the set display zone has been determined by said medium determination means;
menu preparation means for preparing the menu based on information from said work item determination means;
menu display position reading means for reading a coordinate position on the screen display specified by clicking the mouse or similar device, and setting the coordinate position as a menu display position; and
menu displaying means for displaying the menu prepared by said menu preparation means in the coordinate position on the screen display read by said menu display position reading means.

9. A document creation system according to claim 8 wherein said work items are displayed on the screen display when a document is edited with any of the variety of media, functioning as editing commands used for editing the document.

10. A document creation system according to claim 7 or 8 wherein said medium determination means determines which of the various media such as graphics, characters and images corresponds to the set dispaly zone.

11. A method of creating a document in a document creation system having display zones respectively corresponding to each one of various media comprising the steps of:
specifying a coordinate position for a display zone for document creation by means of clicking a mouse or similar device;
reading information on said coordinate position by a specified position reading means;
setting a display zone based on the information on the coordinate position by display zone control means and determining a menu display position by menu display position setting means;
determining the medium of the set display zone by medium determination means;
deleting a previous menu displayed in the neighbourhood of a previously set display zone if any in the case the set display zone is different from the previously set display zone;
preparing information on work items which correspond to the medium of the set display zone by work item control means after medium determination has been performed by said medium determination means;
determining and selecting work items corresponding to the medium of the set display zone based on the prepared information on work items, as the components of a menu, by work item determination means; and
preparing a menu composed of said selected work items by menu preparation means and displaying by menu displaying means said prepared menu in the menu display position determined by menu display position setting means in view of the size of the menu and the like.

12. A method of editing a document in a document creation system having display zones respectively corresponding to each one of various media comprising the steps of:

specifying a coordinate position for a display zone for document editing by means of clicking a mouse or similar device;

reading information on the specified coordinate position by a specified position reading means;

setting a display zone by display zone control means and determining the medium of the display zone to be edited by medium determination means based on information from said display zone control means;

preparing information on work items corresponding to the medium of the set display zone by work item control means based on information from said medium determination means;

determining a menu to be prepared by work item determination means based on information from said work item control means thereby specifying work items and selecting work items corresponding to the medium of the set display zone;

preparing a menu composed of work items corresponding to the medium of the set display zone by menu preparation means;

specifying a coordinate position for the displaying position of the menu on the screen display by clicking the mouse or similar device and reading the specified coordinate position by menu display position reading means; and

displaying the prepared menu on the specified coordinate position by menu displaying means.

13. A document creation system in which a composite document including a plurality of areas of different data media (e.g. graphics, images, characters) can be displayed on a display screen, and in which there is provided means enabling user-designation of a position on the displayed document, and menu display control means for displaying on the screen a menu of user-selectable work items,

characterised by means for automatically determining the form of data medium of the designated document area corresponding to said user-designated position and for causing said menu display control means to display only work items relating to that form of data medium.

14. A document creation system according to claim 13 wherein said menu display control means is operable to display said menu of work items at a position in the region of the designated document area.

15. A document creation system according to claim 13 or claim 14 including means providing user-selection of the position of display of said menu of work items.

EP 0 361 870 A2

# FIG. 1

```
┌──────────────┐    ┌──────────────┐    ┌──────────────┐    ┌──────────────┐    ┌──────────────┐    ┌──────────────┐
│  Specified   │ 7  │ Display zone │ 8  │   Medium     │ 9  │Previous menu │ 9' │  Work item   │ 11 │Menu preparation│ 12
│  position    │───▶│control unit  │───▶│determination │───▶│deleting unit │───▶│determination │───▶│    unit      │
│  reader      │    │              │    │    unit      │    │              │    │    unit      │    │              │
└──────────────┘    └──────────────┘    └──────────────┘    └──────────────┘    └──────────────┘    └──────────────┘
                                              │
                                              ▼
                                     ┌──────────────┐
                                     │  Work item   │
                                     │control unit  │ 10
                                     └──────────────┘
                                                                                        ┌──────────────┐   ┌──────────────┐
                                                                                        │Menu display  │   │ Menu display │
                                                                                        │   position   │   │    unit      │
                                                                                        │ setting unit │   │              │
                                                                                        └──────────────┘   └──────────────┘
                                                                                              13'                  14
```

# FIG. 2

Coordinate position specified — S111

Display zone set — S112

Menu display position set — S113

S115 — Previous menu deleted ← Medium determined — S114

Work item specified — S116

Work item selected — S117

S118 — Menu 1 prepared          Menu 2 prepared — S119

S120 — Menu displayed

# FIG. 3

First graphic display zone

Second graphic display zone

| Graphic menu | |
|---|---|
| Straight line | Line type |
| Rectangle | Line width |
| Circle | Pattern |
| Ellipse | . . . . . . |

# FIG. 4

First graphic display zone

Secod graphic display zone

| Graphic menu | |
|---|---|
| Straight line | Line type |
| Rectangle | Line width |
| Circle | Pattern |
| Ellipse | ....... |

# FIG.5

```
  ┌─7              ┌─8              ┌─9              ┌─11            ┌─12            ┌─13
┌──────────────┐ ┌──────────────┐ ┌──────────────┐ ┌──────────────┐ ┌──────────────┐ ┌──────────────────┐
│  Specified   │ │ Display zone │ │   Medium     │ │  Work item   │ │    Menu      │ │      Menu        │
│   position   │→│ control unit │→│determination │→│determination │→│ preparation  │→│ display position │
│    reader    │ │              │ │    unit      │ │    unit      │ │    unit      │ │     reader       │
└──────────────┘ └──────────────┘ └──────────────┘ └──────────────┘ └──────────────┘ └──────────────────┘
```

Work item control unit — 10

Menu displaying unit — 14

# FIG. 6

```
┌─────────────────────┐
│ Coordinate position │ ──── S1
│     specified       │
└─────────────────────┘
          │
          ▼
┌─────────────────────┐
│  Specified position │ ──── S2
│        read         │
└─────────────────────┘
          │
          ▼
┌─────────────────────┐
│  Display zone set   │ ──── S3
└─────────────────────┘
          │
          ▼
┌─────────────────────┐
│ Medium determined   │ ──── S4
└─────────────────────┘
          │
          ▼
┌─────────────────────┐
│     Work item       │ ──── S5
│     specified       │
└─────────────────────┘
          │
          ▼    S6
        ╱────────╲
       ╱ Work item ╲
      ╱  selected    ╲
       ╲            ╱
        ╲────────╱
   │         │         │
   ▼ S7      ▼ S8      ▼ S9
┌──────────┐┌──────────┐┌──────────┐
│Menu A    ││Menu B    ││Menu C    │
│prepared  ││prepared  ││prepared  │
└──────────┘└──────────┘└──────────┘
   │         │         │
   └─────────┼─────────┘
             ▼
┌─────────────────────────┐
│    Mouse clicked        │ ──── S10
│ (Menu display position) │
└─────────────────────────┘
          │
          ▼
┌─────────────────────┐
│Menu display position│ ──── S11
│       read          │
└─────────────────────┘
          │
          ▼
┌─────────────────────┐
│Menu display position│ ──── S12
│        set          │
└─────────────────────┘
          │
          ▼
┌─────────────────────┐
│  Menu displayed     │ ──── S13
└─────────────────────┘
```

# FIG. 7

# F I G. 8

Graphic display zone

| Delete |
| Copy |
| Move |
| Enlarge /Reduce |
| Deform |
| Compose |

6

Image display zone

3

Character display zone

5

# FIG.9

Graphic display zone

Image display zone

| Delete |
| Copy |
| Move |
| Enlarge /Reduce |
| Rotate |
| Scan |

Character display zone

# FIG.10

Graphic display zone

| Character | Graphics | Image | Editing | . . . . . . . | . . . . . . . |
|-----------|----------|-------------|-----------|---------|---------------|
| Size | Font | Line width | Line type | Pattern | . . . . . . . |

# FIG.11

Graphic display zone

| Straight line |
|---------------|
| Rectangle |
| Circle |
| Ellipse |
| ⋮ |

| Character | Graphics | | | Editing | . . . . . . . | . . . . . . . |
|-----------|----------|--|--|---------|---------------|---------------|
| Size | Font | Line width | Line type | Pattern | . . . . . . . | |

# FIG. 12